# EUROPEAN PATENT APPLICATION

(11) **EP 2 824 290 A2**
(43) Date of publication of application: **14.01.2015**
(21) Application number: 13720980.5
(22) Date of filing: 08.03.2013
(51) Int. Cl.: F01K 3/18, F01K 3/26, F01K 3/06

(54) **METHOD FOR INCREASING THE EFFICIENCY OF POWER GENERATION IN NUCLEAR POWER PLANTS**

(30) Priority: 09.03.2012 ES 201230351
(71) Applicant: Sener Ingenieria Y Sistemas, S.A., 48930 Las Arenas - Vizcaya (ES)
(72) Inventor: HERRAZTI GARCIA, Borja, E-28760 Tres Cantos (Madrid) (ES); LOPEZ GARCIA, Antonio, E-28760 Tres Cantos (Madrid) (ES); GUTIERREZ LARRAÑAGA, Irune, E-28760 Tres Cantos (Madrid) (ES)
(74) Representative: Carpintero Lopez, Francisco
(86) International application number: PCT/ES2013/070148
(87) International publication number: WO 2013/132132

(57) **Abstract**

The present invention relates to a method for increasing the efficiency of electric power generation in pressurized water nuclear power plants, comprising steps of superheating a main steam and reheating the reheated steam by means of an auxiliary circuit, where the streams for the superheating and the reheating work in parallel.

## Description

### Field of the Invention

The present invention relates to a method for being applied in the energy industry, and more specifically in nuclear power plants intended for generating electricity in which the fluid of the primary reactor cooling circuit is water (or heavy water). Said method is applicable in those nuclear power plants the primary circuit of which works with high temperature pressurized water (PWR) and in power plants with boiling water (BWR).

### Background of the Invention

Today, in most nuclear power plants the reactors of which are cooled by water, all the thermal energy generated by the reactor is used for generating saturated steam either in the steam generators or in the reactors themselves depending on the reactor type.

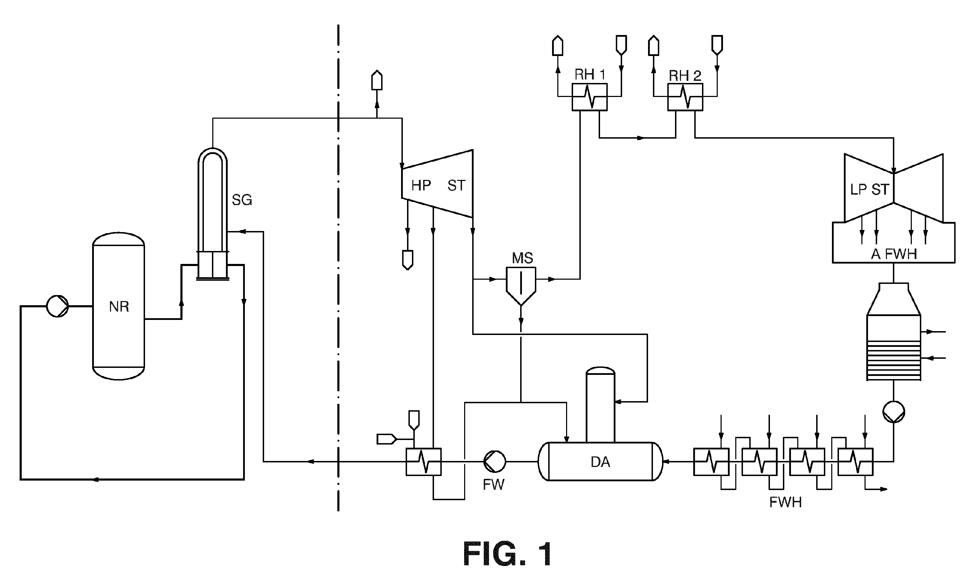

Saturated or slightly wet steam having a relatively high pressure (generally between 55 and 78 bars), referred to as main steam or live-steam, is generated for being expanded in a steam turbine which is usually a condensation turbine with reheating and several bodies. The steam is expanded within the turbine transferring part of its thermal energy, producing mechanical energy which is in turn converted into electric energy by means of a generator coupled to the shaft of the turbine. A cycle having these features can be seen in Figure 1. The expansion process is divided into two phases. In the first phase, the steam is expanded in the high pressure (HP) body of the turbine, from which it exits with a moisture content of the order of or greater than 10%. Passing the steam through a moisture separator (MS) is common practice to remove most of the moisture. After the moisture separator, the steam is reheated to achieve a temperature higher than the saturation temperature (between 50 and 80°C higher) before expanding it in a second phase in the medium or low pressure (LP) body.

In most power plants today, the reheating between the two expansion phases is done in two steps. In the first step, the first reheater (RH1), which is located downstream from the outlet of the high pressure turbine and from the moisture separator is a steam-steam exchanger fed by a high pressure turbine extraction. In the second step, in a second reheater (RH2) also of the steam-steam type, the steam exiting the first reheater with a moderate fraction of live-steam is again reheated. The moisture separator, the first reheater and the second reheater are integrated in a single equipment made up of an outer shell containing therein the moisture separator and the tubular bundles of the reheaters through which the live-steam and the steam from the turbine extraction circulate. The steam originating from the first expansion in the turbine circulates through the inside of the shell and through the outside of the tubular bundles of the reheaters. The steam at the outlet of the reheating is referred to as a reheated steam or simply as reheated.

The objective of reheating in these power plants is to obtain a lower moisture content in the last steps of expansion in the low pressure turbine, providing better protection against the formation of high speed droplets which would damage the blades of the turbine, thus reducing the availability thereof. Furthermore, a small increase in the efficiency of the thermal cycle is achieved.

Once expanded, the steam is condensed in a condenser cooled by a relatively cold fluid, either seawater, river water or water from the cooling towers, depending on the characteristics and location of the power plant.

In most power plants, the condensed steam (or simply, the condensate, as it is commonly known) is pumped to the degasser after passing through the condensate preheaters (three or four, depending on the power plant), which are shell-tube exchangers connected in cascade and fed by different turbine steam extractions, increasing the temperature of the condensate. The degasser where the non-condensable gases dissolved in the condensate are removed is also fed by a turbine steam extraction. Feed water is again pumped from the degasser to the reactor or the steam generator, depending on the type of power plant, by means of the feed water pumps after passing through the feed water preheaters (two or three, depending on the power plant), which are also shell-tube exchangers connected in cascade and fed by the turbine steam extractions.

The objective of both feed water and condensate preheaters is to produce a more regenerative and therefore more efficient cycle.

One of the main features of most of the nuclear power plants the reactors of which are cooled by water is that due to the limitations inherent to reactor design, the live-steam is at limited pressures and at the corresponding saturation temperature. For example, in pressurized light water reactors, pressure and temperature values of between 55 and 78 bars and between 270 and 293°C, respectively, are common. Therefore, the yield of the thermal cycle of these nuclear power plants is less than that of a modern fossil fuel power plant (a difference of more than 10 percentage points).

As a result, the nuclear power plants require *wet steam turbines* because, since they do not have superheated steam at the inlet of the high pressure body and provide a low reheating in the low pressure bodies, they operate with steam that reaches a higher moisture content. The water droplets contained in the steam cause a drop in the yield of the steam turbine as they hit against the blades, in addition to the erosion of those blades, and the high vibrations and stresses in the last steps of expansion. On the other hand, since the yield of the thermal cycle is lower, these turbines operate with higher steam mass flow rates than the turbines of a cycle with high superheating and reheating (the steam has less thermal energy per unit of mass) in order to generate high electrical outputs in the power plant. The higher the steam flow rate, the longer the blades of the last step of expansion must be so that the losses in unloading due to the speed of the steam are not increased. This results in high mechanical stress values in the blades due to the greater moment of inertia. To prevent same, steam turbines usually have two or three low pressure bodies (where the volumetric flow rates are higher, and the blades are therefore longer) of symmetrical dual flow turbine connected in tandem. Normally in addition to steam, water is extracted in the last steps of expansion (and sometimes also in the high and medium pressure bodies) by means of internal moisture separators which are used to feed the condensate preheaters that work at a lower temperature. All these problems arise despite the fact that to reduce the effects of the speed of the water droplets, it is common practice to reduce the rotational speed of the turbine to 1800 or 1500 rpm, depending on the frequency of the grid to which the power plant is connected.

In some nuclear power plants with pressurized water reactors, in order to reduce the size of the steam generators (one of the largest and most expensive pieces of equipment in these installations), the decision is made to reduce the steam generating pressure by increasing the difference between the temperature of the water exiting the reactor and the temperature of the steam exiting the steam generator, thus reducing their cost but sacrificing the yield of the thermal cycle.

Ultimately, the analysis of the state of the art of nuclear power plants the reactors of which are cooled by water shows that more efficient thermal cycles would be desirable in order to increase the efficiency of the power plant and to reduce the moisture content of the expanded steam to thus increase the service life and the availability of steam turbines and simplify their design.

For this purpose, methods have been developed which attempt to improve the yield of the thermal cycle by superheating or reheating the steam by means of different methods. Therefore, for example, patent GB 1,029,151 develops for PWR power plants a method of superheating the main steam and eventual reheating of the reheated steam by means of using part of the energy of the primary circuit through an auxiliary circuit with thermal fluid. Said thermal fluid in turn transfers the received heat to an exchanger which superheats the main steam. An exchanger which reheats the reheated steam before the second expansion in the low pressure turbine is placed in series with the aforementioned exchanger. However, in this manner the superheating of the steam before the high pressure body takes priority, whereby an optimum increase in the yield is not achieved.

According to the configuration described in patent GB 1,029,151, the temperature increase available for superheating the steam is determined by the temperature difference between the primary circuit and the main steam. This difference is relatively small whereby, even by including the necessary temperature jumps in the exchangers of the auxiliary circuit (primary circuit exchanger - auxiliary circuit and auxiliary circuit exchanger - main steam), the increase in steam temperature, and thus the main advantages of superheating and reheating, are limited: the increase in the efficiency of the cycle, and reduction in moisture content at the exhaust outlet of the high pressure turbine, preventing the formation of high speed droplets which would damage the blades.

### Object of the Invention

The object of the invention is to overcome the technical problems mentioned in the preceding section. To that end, the invention proposes a method for increasing the efficiency of electric power generation in pressurized water nuclear power plants comprising the steps of: superheating the saturated or slightly wet steam originating from the steam generator before entering a turbine; reheating said steam with a high pressure turbine extraction and reheating it again using live-steam from the reactor; the steam reheated in the preceding step is again reheated, exchanging heat with a thermal fluid at a higher temperature; this reheated steam is expanded in the low body of the steam turbine, is then condensed and recirculated to the steam generators after heating with water steam originating from turbine extractions. The superheating in the first step and the reheating before the low turbine are performed by means of an auxiliary thermal fluid circuit, with the streams for the superheating and the reheating working in parallel. The exchange with the auxiliary circuit can be performed by means of pressurized water (at a higher temperature) coming in turn from a second auxiliary circuit which diverts part of the water from the reactor to an exchanger. Alternatively, the energy source or sources used for the superheating and reheating auxiliary circuit can be external to the power plant, renewable sources being preferred (but not necessary).

As a result of the parallel configuration of the superheating and reheating exchangers, the temperature of the auxiliary circuit available for the reheating is higher with respect to a series configuration such as that described in the state of the art.

### Brief Description of the Drawings

For the purpose of aiding to better understand the features of the invention according to a preferred practical embodiment thereof, a set of drawings is attached to the following description in which the following has been depicted with an illustrative character:
Figure 1 shows the schematic configuration of a pressurized light water (PWR) nuclear power plant.
Figure 2 shows a configuration according to the invention in which part of the thermal energy of the reactor is used for superheating the main steam and reheating the reheated steam.
Figure 3 is a diagram of the configuration of a PWR power plant according to an embodiment which directly uses the thermal fluid from a solar field for superheating the main steam and reheating the reheated steam.
Figure 4 shows a diagram of the PWR configuration according to an embodiment which uses the energy from a solar field by means of an auxiliary pressurized water circuit for superheating the main steam and reheating the reheated steam.

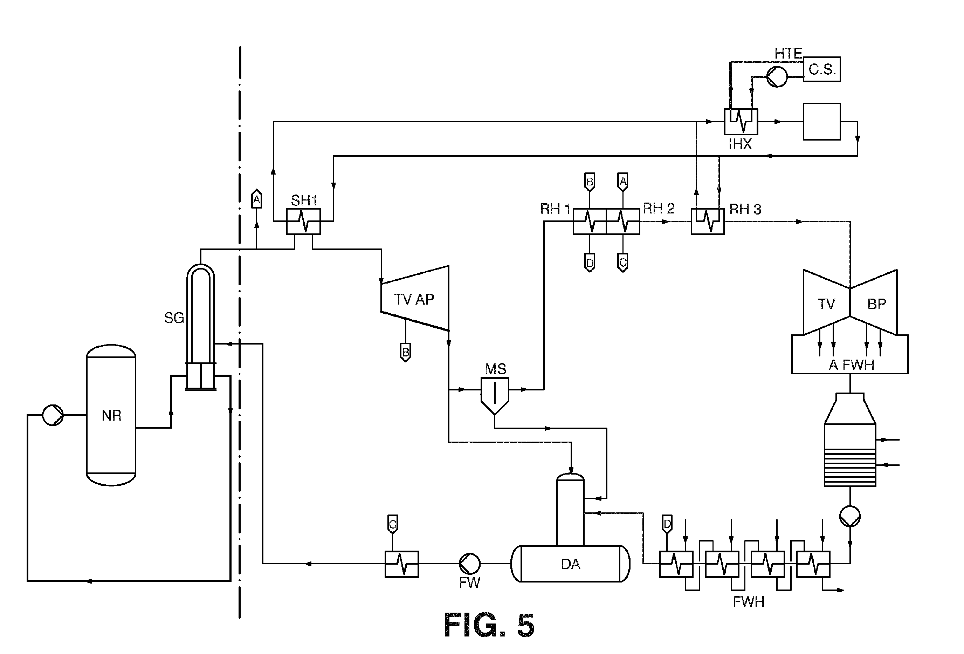

Figure 5 shows a configuration in which the energy originating from two different heat sources located in series is used for superheating the main steam and reheating the steam reheated by means of a single auxiliary circuit.

### Detailed Description of the Invention

The method of the invention comprises a step within the thermal cycle which consists of increasing the degree of reheating the steam such that the yield of the medium and/or low pressure body of the steam turbine increases, further reducing the moisture contained in the steam in the last steps of the expansion, with the subsequent effect of reducing the high speed impact of the droplets on the blades. Associated problems of vibrations and wear in the blades are thus reduced and the availability of the steam turbine, and accordingly the availability of the entire nuclear power plant, increases. The method also comprises a step of superheating the steam as it reaches the steam turbine, therefore increasing the thermal energy of the live-steam per unit of mass and the yield of the thermal cycle.

### With external heat source

In a first aspect, the invention is applicable when one or several energy sources external to the actual reactor of the power plant with a hot spot temperature higher than that of the hot water of the primary exiting the reactor at a high pressure are available or can be built in the vicinity of the plant. These energy sources could be renewable sources, fossil fuel sources or even nuclear sources.

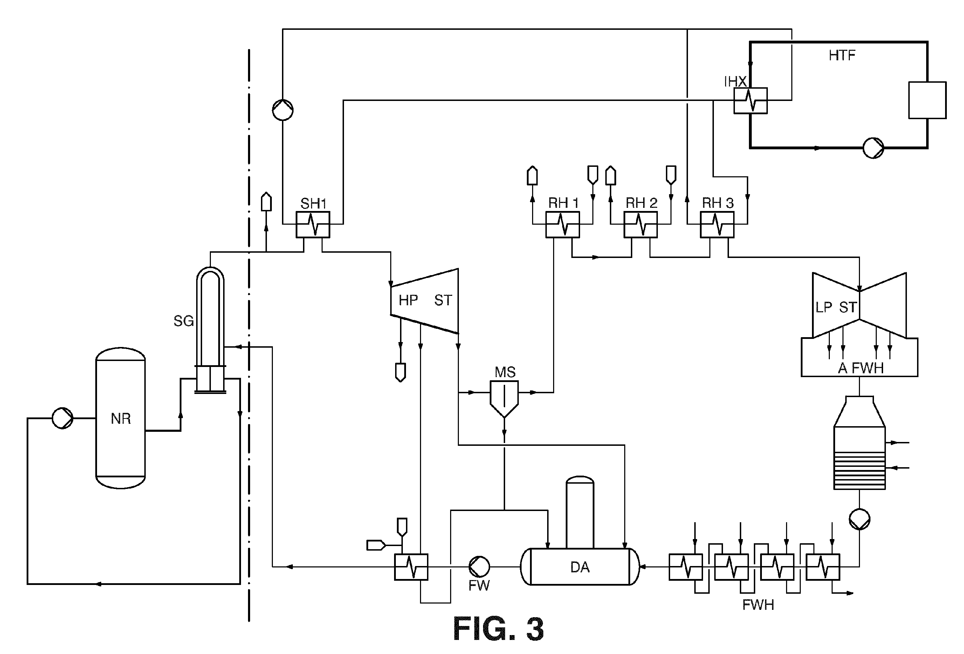

In this case, the method for increasing the energy efficiency of the heat cycles of the nuclear power plants comprises the following steps (Figure 3):
a) The saturated or slightly wet steam produced in the steam generator, after the feed water is heated in a regenerative cycle through which it is pumped under pressure to the steam generator, is superheated in a superheater (SH1) by means of a heat exchange fluid which is in turn heated from one or several external heat sources. The fluid can be pressurized water or any other fluid, provided that it is at a higher temperature than the saturated live-steam.
b) The superheated steam is expanded in the high pressure body of the steam turbine, steam with an intermediate or low pressure and a moisture content generally less than 10% being obtained.
c) The steam obtained in step b is dried by means of at least one moisture separator (MS).
d) The steam with intermediate pressure dried in step c is reheated in a first reheater (RH1) fed by a high pressure turbine extraction.
e) The steam reheated in the first instance in step d is additionally reheated in an exchanger (RH2) in which part of the live-steam diverted before the superheater (SH1) of step a) acts as a hot fluid.
f) The steam reheated in the second instance is additionally reheated in a thermal fluid - steam exchanger (RH3 in Figure 3), in which the heating fluid is a thermal fluid (the thermal fluid of step a which in turn receives the energy from the external sources (similar to or different from the sources in paragraph a).
g) The reheated steam obtained in step f is reheated in the low pressure body of the steam turbine directly. Alternatively, the expansion can be done in a medium pressure body at the outlet of which it passes to the low turbine, in which case the inlet pressure in this low turbine is less than that of the turbines lacking this step of medium pressure. All this depends on the configuration of the turbine with which the power plant will be equipped.
h) The condensed water from the secondary used for generating the saturated steam of step a is heated by means of using a plurality of turbine steam extractions for exchanging heat with said water of the secondary and heating the water before being pumped to the steam generator or generators.
i) Once the heat exchange fluid has transferred its heat in the exchangers (SH1 and RH3), it returns to the external heat sources (one or several sources) where thermal energy is again obtained.

The energy provided from outside the nuclear power plant for improving steam quality by means of superheating and reheating the steam can be obtained from one of the sources mentioned below or from other similar sources:
1) Renewable energies: solar thermal energy with parabolic trough collectors or a central tower with heliostats or other similar systems, being able to use heat storage systems such as solid or molten salts, energy originating from solid urban waste, energy originating from either forest biomass or biomass from crops for that purpose, solid, liquid and gas fuels originating from biomass, geothermal energy, etc.
2) Non-renewable energies: Energy originating from industrial processes: refineries and other chemical industries, iron and steel mills, thermal power plants for generating electricity with the simultaneous production of thermal energy; plants intended for generating thermal fluid from fossil fuels.
3) Nuclear energy, including energy from reactors known as *fast-breeder reactors,* in which various fluids (helium, liquid sodium, etc.) which allow achieving high temperatures are used as coolant.

A difference and an improvement with respect to the prior art which uses external heat sources for superheating or reheating the steam is the use of an auxiliary circuit of any thermal fluid which allows connecting several heat sources in parallel or in series, and which maintains the nuclear circuit isolated from the external heat source or sources. Furthermore, this configuration allows the inclusion of heat sources originating from renewable energies, such as solar energy or biomass.

### Without external heat source

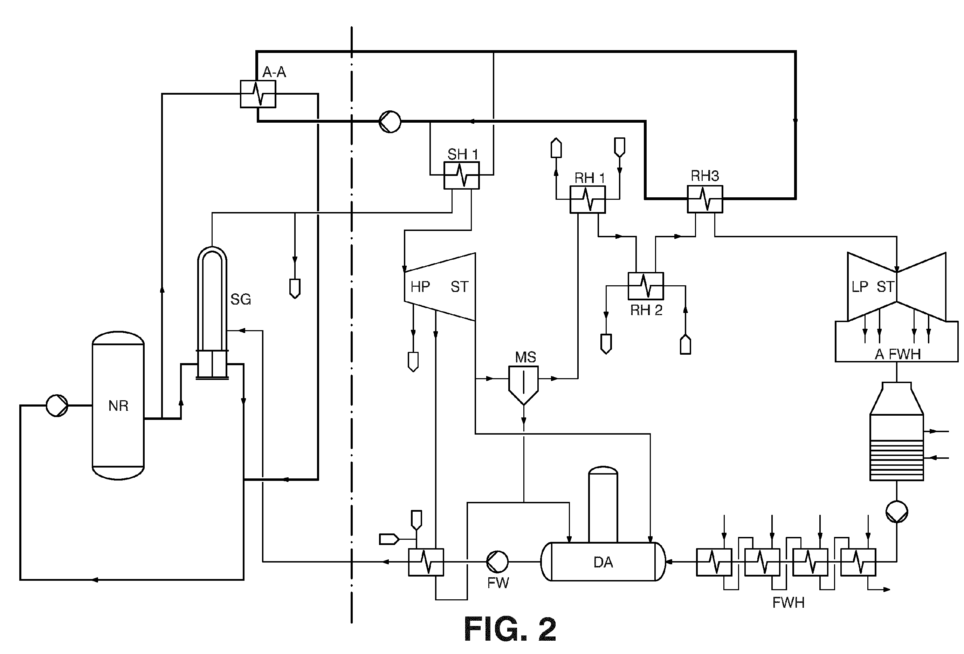

In the event that a heat source external to the actual reactor is not available, the invention will only be applicable to nuclear power plants with pressurized water reactors (PWR), with water or heavy water. In that case, the method for increasing the energy efficiency of the heat cycles of the nuclear power plants with such pressurized water reactors comprises the following steps shown in Figure 2:
a) Part of the water of the primary which is pressurized and heated by heat transfer in the reactor is directed to a water exchanger of the primary-auxiliary thermal fluid (A-A) located in the containment building, the rest is directed to the steam generators, where it circulates through a bundle of tubes for exchanging thermal energy with the water of the secondary originating from the steam turbine after being heated in a regenerative cycle, from which it is pumped under pressure to the steam generator to convert it into a saturated or slightly wet steam.
b) The auxiliary thermal fluid which is heated in the exchanger mentioned in the preceding step (A-A) is divided into two streams: the first one superheats the main steam (see point c), and the second one reheats the reheated steam (see point h)
c) The saturated or slightly wet steam generated in the steam generator is superheated by means of an exchanger (SH1), in which the hot fluid is the auxiliary thermal fluid originating from the exchanger located in the containment building water of the primary - thermal fluid (A-A).
d) The superheated steam is expanded in the high pressure body of the steam turbine, steam with an intermediate pressure with moisture that can reach the order of 10% in the last step of expansion being obtained.
e) The steam obtained in step d is dried by means of at least one moisture separator.
f) The steam with intermediate pressure dried in step e is reheated in a first reheater fed by a high pressure turbine extraction (RH1).
g) The reheated steam in step f) is additionally reheated in a second reheater fed with live-steam originating from the steam generator or generators (RH2).
h) The steam reheated in the second instance is again reheated in a third reheater (RH3), heated by means of the second stream of auxiliary thermal fluid of point b.
i) The reheated steam obtained in step e is expanded in the low pressure body of the steam turbine directly. Alternatively, the expansion can be done in a medium pressure body at the outlet of which it passes to the low turbine, in which case the inlet pressure in this low turbine is less than that of the turbines lacking this step of medium pressure.
j) The condensed water of the secondary used for generating the saturated steam of step a) is heated by means of using a plurality of turbine steam extractions for exchanging heat with said water of the secondary and heating the water before being pumped to the steam generator or generators.
k) Once the auxiliary thermal fluid of points c and h has transferred its heat to the live-steam and to the reheated steam, respectively, it returns to the water exchanger of the primary-auxiliary thermal fluid (A-A) to be heated again.

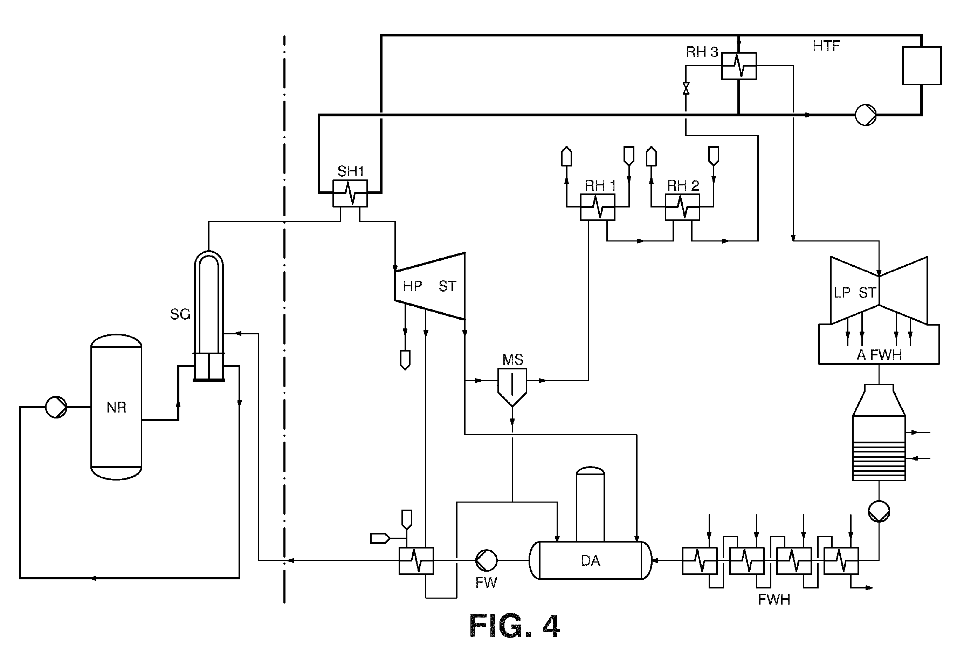

By way of example, the conventional configuration of a pressurized light water nuclear power plant (Figure 1) is compared with the configuration of a pressurized light water power plant according to the invention, with an external solar type heat source in the auxiliary circuit (Figure 4).

In the conventional configuration, the main saturated steam (78 bars) is expanded in the high pressure body of the steam turbine to a pressure of 11 bars, reaching a moisture content of 15.2% at the outlet. After passing through the moisture separator, a first reheating with high pressure turbine extraction steam and a second reheating with main steam, the steam reaches the conditions of 10.47 bars and a temperature of 278.5°C before being introduced in the low pressure steam turbine where it is finally expanded to the pressure of 0.05 bars, with a moisture content of 13.2%.

According to an implementation of the invention, the superheating and reheating of the steam will be performed by means of respective heat exchangers through which high pressure hot water streams (325°C and 140 bars) originating from the exchangers from the adjacent solar field will circulate.

The pressurized water stream which reaches the superheater (SH in Figure 4) transfer its heat to the main steam, reducing its temperature to 298°C. The main steam achieves a superheating of 7°C before entering the high pressure body of the steam turbine where it is expanded to a pressure of 11.2 bars, achieving a moisture content of 13.5%. After the moisture separator, a first reheating with extraction steam of the high pressure body of the steam turbine and a second reheating with main steam, the steam is again reheated in a third reheater with the other pressurized water stream, achieving the steam conditions of 10.47 bars and 300.5°C. The steam is then expanded in the turbine to the pressure of 0.05 bars, achieving a moisture content of 12.2%.

Once the pressurized hot water streams transfer their heat, they are mixed and returned to the solar heat source where they are heated by means of thermal fluid from the adjacent solar field, achieving the temperature of 325°C again.

In summary, a table with the most significant parameters of the two configurations is shown:

| | Units | Conventional | Invention |
|---|---|---|---|
| Reactor type | | PWR | PWR |
| Reactor thermal power | MWt | 4,300 | 4,300 |
| Pressure of main steam at the inlet of the steam turbine | bar | 75.6 | 75.6 |
| Temperature of main steam at the inlet of the steam turbine | °C | 291 | 298.7 |
| Titer of the steam/superheating of the steam | %/°C | 99.8% | 7.7°C |
| Moisture after the first expansion | % | 15.2 | 13.5 |
| Pressure of reheated steam at the inlet of the steam turbine | bar | 10,47 | 10,47 |
| Reheated steam temperature | °C | 278.5 | 300.5 |
| Superheating of the steam | °C | 96.6 | 118.6 |
| Moisture content after the second expansion | % | 13.2 | 12.2 |
| Electrical output in the generator of the steam turbine | MWe | 1,671.6 | 1,746.9 |
| Thermal power provided | MWt | NA | 178 |
| from the adjacent solar field | | | |
| Gross yield of the power plant considering all the heat sources | % | 38.87% | 39.01% |
| Additional power from the external energy | MWe | NA | 75.3 |
| Gross yield of the additional external (solar) energy | % | NA | 42.3% |

Based on Table 1, it is directly deduced that a slight increase in the degree of superheating, both of the main steam and of the reheated steam, results in the technical effects mentioned above. On one hand, it increases the overall yield of the plant, in this case by 0.36% (0.14 point difference); and on the other, it reduces the moisture at the exhaust outlet, both in the high pressure turbine and in the low pressure turbine, thus improving the yield thereof and reducing the effect of erosion of the blades.

The parallel configuration of the two pressurized water streams allows both the superheated steam and the reheated steam to reach the maximum available temperature of the external source which is close to 300°C with the necessary temperature jumps of the auxiliary intermediate exchangers. With a series configuration, first passing through the superheater (in which the same steam temperature would be achieved), the temperature of the pressurized water stream would drop, therefore, the maximum temperature available for the reheater would be less. This would cause the temperature of the steam reheated before entering the turbine to be lower than 300°C, and therefore the increase in efficiency and the reduction in moisture will also be less.

## Claims

1. Method for increasing the efficiency of electric power generation in pressurized water nuclear power plants, comprising the following steps:
a. the saturated or slightly wet steam originating from the steam generator (SG) is superheated before entering a steam turbine (ST) with several bodies;
b. the steam reheated with steam from a high pressure (HP) turbine extraction, is again reheated using live-steam from the reactor;
c. the steam reheated in the preceding step is again reheated, exchanging heat with a thermal fluid at a higher temperature;
d. the reheated steam of step c is expanded in the low (LP) body of the steam turbine;
e. the expanded steam of step d is condensed and the condensed water is recirculated to the steam generators after heating with water steam originating from turbine extractions
**characterized in that** the superheating in a and the reheating in c are performed by means of an auxiliary thermal fluid circuit with the streams for the superheating and the reheating working in parallel.

2. Method according to claim 1, **characterized in that** in steps a and c the exchange with the thermal fluid is performed by means of pressurized water and at a higher temperature, where the water originates from a second auxiliary circuit which diverts part of the water from the reactor to an exchanger.

3. Method according to claim 1, **characterized in that** the energy source or sources used for the superheating and the reheating of steps a and c is/are external to the power plant.

4. Method according to any of claim 3, where the energy source or sources is/are a renewable source.
